# EUROPEAN PATENT APPLICATION

(11) **EP 2 412 780 A1**
(43) Date of publication of application: **01.02.2012**
(21) Application number: 10733267.8
(22) Date of filing: 25.01.2010
(51) Int. Cl.: C09K 5/00, E04B 1/76, C08G 59/00

(54) **COMPOSITION AND PROCEDURE FOR APPLYING PHASE CHANGE MATERIALS (PCMS) TO NATURAL STONE**

(30) Priority: 26.01.2009 ES 200900293
(71) Applicant: Asociacion De Investigacíon De Industrias De La Construccíon AIDICO- Instituto Tecnológico De La Construccíon, 46980 Paterma Valencia (ES)
(72) Inventor: ROMERO SÁNCHEZ, María Dolores, E-46980 Paterna (Valencia) (ES); GUILLEM LÓPEZ, Celia, E-46980 Paterna (Valencia) (ES); LÓPEZ BUENDÍA, Ángel Miguel, E-46980 Paterna (Valencia) (ES); ARISTEIDIS ELISSABET, Founti Maria, 9-15780 Athens (GR)
(74) Representative: Munoz Garcia, Antonio
(86) International application number: PCT/ES2010/000022
(87) International publication number: WO 2010/084223

(57) **Abstract**

This Invention is a composition of phase change materials (PCM) and its application to the natural stone In order to improve its thermal properties. Several PCMs are used according to the type of stone and the way they are introduced or applied to the stone: the use of powdered PCMs, emulsions, etc. depends on the stone porosity and on the way the PCMs will be applied.

The PCMs are incorporated into the natural stone as:
Layer on the stone's surface.
Filler applied In the back surface of the natural stone.
Reinforcing Interlayer (for example, as a mortar) applied in the back surface of the natural stone.
Impregnation by immersion of the stone in a solution with PCM.

## Description

### OBJECT OF THE INVENTION

The industrial sector to which this invention belongs is the building materials one.

This invention is about the description of the composition and the process of application of the phase change materials (PCM) in layers or by impregnation to the natural stone in order to improve its thermal properties (thermal conductivity and specific heat).

The use of these environment-friendly materials in the construction of buildings would remarkably improve the thermal inertia of the sidings and would reduce the energy consumption of the air-conditioning devices. The natural stone is a building material that may contribute to the energy saving effectively.

### BACKGROUND OF THE INVENTION

The worldwide economic and technological development calls for a greater energy demand and greater comfort expectations (heat and air-conditioning systems). However, the energy resources are limited and are linked with the emission of harmful gases, which are responsible for the climate change, global warming and the environmental issues. The PCMs are presented as a solution to reduce the energy demand via adding PCMs to building materials like cement, gypsum or the laminated gypsum wallboards.
- D.Zhang, Z. Li, J. Zhou, K. Wu, "Development of thermal energy storage concrete", Cement and Concrete Research. 34 (2004),927-934
- A.M. Khudhair, M.M. Farid, "A review on energy conservation in buildings applications with thermal storage by latent heat using phase change materials", Energy Conversion and Management, 45 (2004), 263-275.

Several chemical compounds that may be used as latent heat storage materials have been used: paraffin wax, fatty acids, hydrated salts, etc.

The use of PCMs as thermal storage systems has been a field of interest since its first application in the forties. The PCMs store latent heat as the ambient temperature rises until the melting point (the PCMs change from solid state to liquid state). As the temperature falls, the PCMs return to the solid state and the latent heat is released. This heat absorption and release happens at a constant temperature, which turns out to be ideal in order to moderate the temperature fluctuations.

The PCMs' thermal energy storage property is based on its latent heat storage capacity, because it is possible to store large quantities of energy in a small volume of PCM. Consequently, the materials of the PCM may absorb and release heat in a more efficient way than the conventional building materials [D.W. Hawes, D. Feldman, "Latent heat storage in building materials", Energy and Buildings, 20, 77-86 (1993)]. However, in order to be able to use the PCMs in an efficient way, it is important to select the melting point.

The PCMs are directly incorporated in the gypsum wallboards for the building of partitions in the melting phase during the production of gypsum. Feldman et al [D. Feldman, D. Banu, "Obtaining an energy storing building material by direct incorporation of an organic phase change material in gypsum wallboard", Solar Energy Materials, 22, 231-242 (1991)] directly incorporated butyl stearate as PCM during the gypsum production achieving increasing by ten times the thermal storage capacity compared to the gypsum without PCM.

Several references on the use of PCMs to improve the concrete and gypsum properties have been found. Several authors [D.W. Hawes, D. Banu, D. Feldman, "Latent heat storage in concrete". Solar Energy Mater, 21, 61-80 (1990)] have studied the thermal efficiency of the PCMs in different types of concrete blocks. The thermal storage in concrete with PCM raised by more than 200 %.

Salyer et al [I,O. Salyer, A.K. Sircar, A. Kumar, "Advanced phase change materials technology: evaluation in lightweight solite hollow-core building blocks", Proceedings of the 30th Intersociety Energy Conversion Engineering Conference. Orlando, FL, USA, 1995, pp. 217-227.] have developed several methods of PCM incorporation in bricks: porous materials embedded with PCM, through the absorption of the PCM in silica or the incorporation of the PCMs into polymeric carriers.

Several applications of the PCMs as energy storage systems have been found. Nowadays, the PCMs are used in low temperature solar thermal applications [S.D. Sharma, H. Kitano, K. Sagara, "Phase Change Materials for low temperature solar thermal applications", Res. Rep. Fac. Eng. Mie Univ., Vol. 29, pp. 31-64 (2004)], in solar panels, as insulating materials in sport clothes [S. Moldal, "Phase change materials for smart textiles", Applied Thermal Engineering, 28, 1536-1550 (2008)] or in bed accessories [I.O. Salyer, "Phase change materials incorporated throughout the structure of polymer fibers", US patent 5.885.475 (1999)], for the cold thermal storage for vegetable cooling [H. Kowata, S. Sase. M. Ishii, H. Moriyama, "Cold water thermal storage with phase change materials using nocturnal radiative cooling for vegetable cooling", Proceedings of the World Renewable Energy Congress WII, Cologne (Germany), 2002].

On the other hand, the main difficulty in the use of PCMs is its incorporation to building materials. They can be incorporated directly by immersion, as powder (microencapsulated) o as silt, in huge tanks or tubes (macroencapsulated), etc. For this reason, this invention proposes several methods to incorporate the PCMs in natural stone according to the porosity of the natural stone.

The 2002/91/EC Directive on the energy performance of buildings points out that the measures to improve energy savings in buildings should take into account the climatic and local conditions as well as indoor climatic environment. For this reason, this invention considers different applications and uses of the PCMs incorporated into the natural stone.

### DESCRIPTION OF THE INVENTION

This patent is about the composition and the process of application of phase change materials (PCM) to the natural stone with the aim of improving its thermal properties.

The processes for the application of the new material (natural stone-PCM) may differ depending on how it is applied: natural stone for the exteriors or facades, soil heating or undersoil heating.

Several PCMs are used according to the type of stone and the way they are introduced or applied to the stone: the use of powdered PCMs, emulsions, etc. depends on the stone porosity and on the way the PCMs will be applied.

The PCMs are incorporated into the natural stone as:
Layer on the stone's surface. The PCMs can be introduced into the formula of the resin used for the consolidation of the stone.

Reinforcing interlayer (for example, as a mortar) applied in the back surface of the natural stone.

Impregnation by immersion of the stone in a solution with PCM.

The selection of the process for the application of the PCMs is done according to the final use in the building (both for indoor and outdoor applications) and to the type of stone, mainly with regard to its porosity:
- Low-porosity materials
- Average-porosity materials
- Macro-porous or high-porosity materials

### 1, Incorporation of the PCMs into low-porosity natural stone:

The PCMs are incorporated into the low-porosity natural stone as body putty in the composition of the consolidation resins used in the process of the stone reinforcement (at the exposed surface) o included in the composition of the mortars applied in the back surface of the natural stone.

1.1 As body putty of consolidation resins: The consolidation consists of the application of a polymeric resin that improves the cohesion between the mineral components and increases the mechanical resistance of the stone. Nowadays, the most used consolidation components in natural stones aiming at reinforcement are the thermosetting organic polymers. The PCMs are incorporated like body putty into the thermosetting resins.

A good compatibility between the PCMs and the thermosetting resin is obtained. The PCMs behave as normal body putty under the melting temperature and store heat once the melting temperature is reached. What happens is an increase of the resin viscosity as a consequence of adding the PCMs. Solvents are added to reduce the viscosity.

Example of natural stone treatment with a PCM-epoxy resin composition:
Epoxy resin: 83,3 g
Hardening agent for the epoxy resin: 50 g
Water: 80 g
PCM (powder): 10,66 g

The water is used as solvent of the hardening agent. After stirring, the epoxy resin and the PCMs are added. The mixing is stirred during 1 or 2 minutes, at 400 rpm, before being applied on the surface of the natural stone with a spatula or a palette. The natural stone-PCM parts are placed in the oven at a temperature of 70°C during 24 hours for the polymerisation of the resin.

1.2 As body putty of mortars: The PCMs are incorporated into the mortars compositions as body putty and are applied as reinforcing interlayer in the back surface of the natural stone.

This can be used in apartments or houses with soil heating systems (radiant flooring heating).

Example of natural stone treatment with a PCM-mortar composition:
Epoxy resin: 8,33 g
Hardening agent for the epoxy resin: 5 g
Water: 6,67 g
Stone aggregates: 12,5 g
PCM (powder): 5 g

The water is used as solvent of the hardening agent. After stirring, the epoxy resin and the PCMs are added. The mixing is stirred during 1 or 2 minutes, at 400 rpm, before adding the stone aggregates. Finally, it is being stirred for 1 or 2 minutes before being applied on the surface of the natural stone with a spatula or a palette.

Several mortar compositions are prepared by using different percentages of epoxy resin, natural stone aggregates and PCMs.

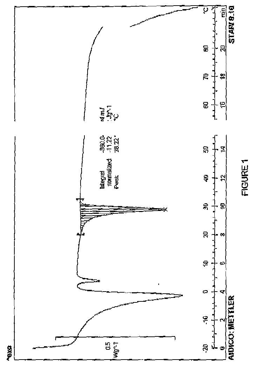

Figure 1 includes the measurement by differential scanning calorimetry (DSC) of the mortar that has PCM. It can be seen that the peaks correspond to the melting temperature of water and of the PCMs. The calculation of the integral of this peak gives us the value of the energy stored during the melting process of the PCM.

See Figure 1. Measurements by differential scanning calorimetry of the mortar that contains PCM.

Results of the experiment: An experiment has been designed to measure the temperature inside a box. The box (that is 30 x 30 x 30 cm) has been made using insulating material. One side of the box is a stone sheet (30 x 30 x 2 cm). Another box has been made in a similar way using another stone sheet that contains PCM.

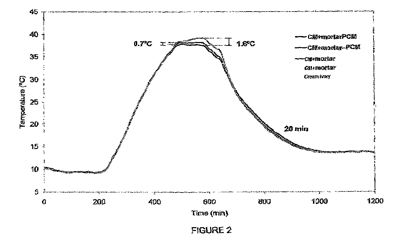

The boxes have been left outside for seven days and the temperature variations have been measured using a thermocouple placed inside each box. The goal is to analyze the differences of temperature inside the box with a stone side and inside the one with a stone side with PCM (Figure 2).

In Figure 2, we can see the temperature inside 3 boxes: the temperature inside a box with a side with low-porosity natural stone with a mortar that contains PCM, the one inside a box with natural stone with mortar without PCM and the one inside a box with a natural stone sheet.

The PCM effect is more marked as the temperature is higher: the maximum temperature for the natural stone with mortar with PCM is 1,6°C lower than the one for the natural stone without mortar and 0,7°C lower than the one for the natural stone with mortar without PCM.

At low temperatures, a greater comfort inside the house is achieved; as an example, it can be seen that there is a delay of 20 minutes to reach the temperature of 20°C as far as the natural stone with mortar with PCM is concerned.

See Figure 2. Temperature versus time inside a box with a side with natural stone with mortar that contains PCM, the one inside a box with a side with natural stone with mortar without PCM and the one inside a bow with a natural stone side.

### 2. Incorporation of the PCMs into average-porosity natural stone;

The natural stone with average-sized pores is impregnated with PCM aiming at providing it thermal properties. The natural stone is bathed in a solution that contains PCM (different vacuum conditions and different solutions of PCM, times of immersion, etc.).

Example of treatment of natural stone with PCM.

The natural stone with average porosity is bathed in a PCM solution under vacuum (100 mbar). Several steps are carried out:
The natural stone is placed in a vacuum packed tray (100 mbar) for 1-3 hours.

The PCM solution is incorporated into the vacuum chamber and the natural stone is bathed in this solution. The vacuum is kept for one hour.

The vacuum gets broken. The natural stone remains in the bath for 2 hours in ambient conditions.

The natural stone-PCM is placed in an oven at a temperature of 50°C during 24 hours in order to dry it.

### Results of the experiment:

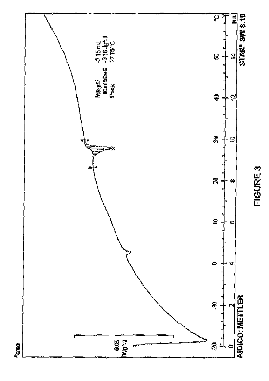

Thermal characterisation: The thermal analysis of the average porosity natural stone with PCM has been carried out through differential scanning calorimetry (DSC). The experiment has been carried out with a temperature variation from - 20°C to 60°C at 5°C/minute (Figure 3).

See Figure 3. Measurements by differential scanning calorimetry of the average porosity natural stone plus 0.5 % of PCM.

### Scanning electron microscopy (SEM).

Several parts of average porosity natural stone and of average porosity natural stone with PCM were analysed through scanning electron microscopy aiming at evaluating the PSM presence in the structure of the natural stone.

Figures 7A and 7B show the structure and the distribution of the pores in the natural stone. We can also observe fossils in the structure of the stone.

Figures 8A and 8B are micrographs of the average porosity natural stone plus PCM. It can be seen how the PCMs fill the pores of the stone, which shows that the PCMs are in the greater part of the natural stone.

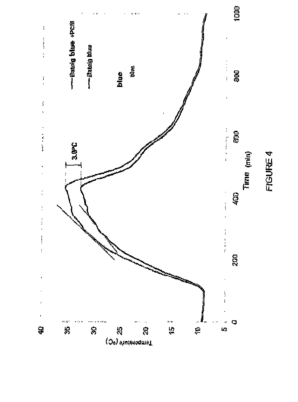

The same experiment was carried out by measuring the inner temperature of a box with an average porosity natural stone side and another one with a PCM treated natural stone. The results are presented in Figure 4. The temperatures were measured during several days. The results happen again, so the temperatures that are shown are for a cycle of one day.

It can be observed a difference of 3 degrees at higher temperatures between the natural stone with PCM sheet and the one without PCM. Moreover, the process of warming of the sheet with PCM is smoother, as it can be deduced from the slope of the curve. The slope of the warming is greater for the natural stone without PCM. There is a delay of 15 minutes to reach smoother indoor temperatures (20°C).

See Figure 4. Temperature versus time inside a box with a side with average porosity natural stone and a box with a side with PCM treated natural stone.

The thermal properties of the average porosity natural stone have been evaluated. Table 1 shows the values of thermal conductivity and the volumetric heat capacity of the average porosity natural stone and of the average porosity natural stone with PCM.

**Table 1. Thermal properties of the average porosity natural stone and of the PCM treated natural stone.**

| | Thermal conductivity (W/m K) | Volumetric heat capacity (kJ/m³ K) |
|---|---|---|
| Average porosity natural stone | 1.872 | 2191,7 |
| Average porosity natural stone plus PCM | 1,997 | 2308,7 |
| Increase (%) | **6,7** | **5,3** |

The values show that there has been an increase of 6,7% in the thermal conductivity when the PCMs have been incorporated into the average porosity natural stone comparing with the same material without PCM. Moreover, the volumetric heat capacity has also increased as a consequence of the PCMs' presence. This value shows that the sample with PCM needs more amount of energy to modify its temperature given that the PCMs absorb part of the energy. Consequently, the thermal properties of the average porosity natural stone have been modified through the incorporation of PCMs.

### 3. Incorporation of the PCMs into macroporous natural stone

Fillers with high-viscosity PCMs for the macroporous natural stone are prepared and used to fill the macropores of the stone.

This way, we achieve that the natural stone acquires thermal storage properties. The amount of added PCMs may vary according to the requisites of heat storage (situation, melting temperature of the PCM, interval of temperatures between day and night, etc.). The filler has been prepared with epoxy resins and PCMs. The percentage of used PCMs varies with the aim of having fillers with different properties and viscosities.

Example of treatment of natural stone with a composition of PCM-filler.
Epoxy resin: 15 g
Hardening agent for the epoxy resin: 9 g
Water: 9,6 g
PCM (powder): 6,72 g

The water is used as solvent of the hardening agent. After stirring, the epoxy resin and the PCMs are added. The mixing is stirred during 1 or 2 minutes, at 400 rpm, before being applied on the surface of the natural stone with a spatula or a palette.

Examples of applications of the PCM treated natural stone in buildings:
a) Outdoor, for outdoor use, facades, ventilated facades. As for the ventilated facades, the properties of the thermal storage are used for the heat insulation of the building. Moreover, after the priming with PCM, acrylic and moisture-repellent can be applied on the surface of the stone.
b) Indoors. The PCMs may be applied on the back surface of the natural stone for the heat storage during the day and the heat release during the night, regulating the temperature in the rooms and reducing the time the heat system is needed. In special, application for radiant flooring heating.
c) It increases the stone lifetime. The materials with PCM are not exposed to extreme variations of temperature. The interval in which the temperature ranges is being reduced with the use of PCMs, in such a way that it increases the stone lifetime.

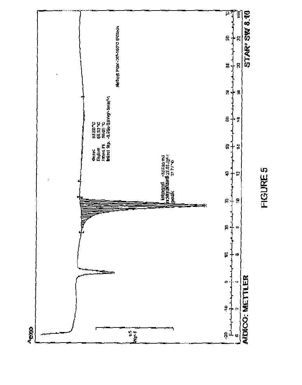

Results of the experiment: Thermal properties of the filler with PCM: the experiment with differential scanning calorimetry (DSC) was carried out with a variation of temperature between -20°C to 100°C at 5°C/minute. (Figure 5).

See Figure 5. Measurements by differential scanning calorimetry of the filler with PCM.

The transition temperature of the filler based on epoxy resin is 58°C, which is inside the range of values obtained for the epoxy resins. The energy linked with the melting process of the PCMs is 89,6 J/g of PCM.

This value may be increased or decreased according to the requisites of each application.

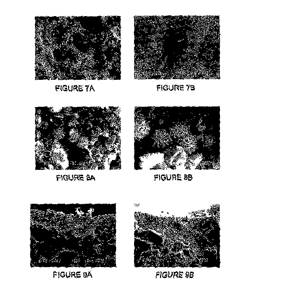

Figures 9A and 9B are micrographs (done with the scanning electron microscope) of the cross-section of the natural stone filled with PCM filler. The PCM as well as a full filling of macropores of the natural stone may be observed.

It seems that the PCMs are being destroyed in the micrographs. This can be explained by the vacuum applied for its introduction in the microscope.

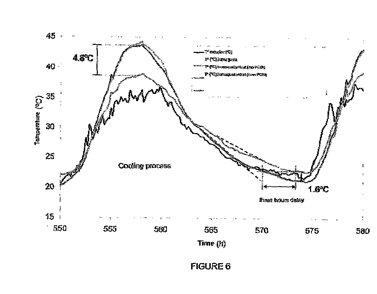

Boxes with thermal insulation material and with a natural stone side have been prepared. One box has a sided with natural stone, another one with a side with natural stone with resin and a third one with a side with natural stone filled with filler with PCM. The temperature inside the boxes has been measured each 10 minutes. Figure 6 shows the variations of temperature inside the boxes.

It is important to realise that:
1. The maximum temperature of the box with natural stone is always higher than the box with natural stone filled with filler-PCM. Moreover, the natural stone with resin shows a high maximum temperature. Consequently, the decrease of the maximum temperature is due to the effect of the PCMs. The difference between the materials treated with PCM and the ones not treated with PCM is 4,8°C.
2. We obtain a delay time of 3 hours for the box with natural stone with PCM compared with the box with natural stone with resin or with the natural stone sheet.
3. The night minimum temperature of the box with natural stone is lower than the one with natural stone filled with filler-PCM. The difference is about 1,6°C. At night, the heat accumulated during the day in the natural stone with filler-PCM is released. This way, the temperature has not decreased so much as for the box with natural stone without PCM.
4. The time needed for the boxes to reach low temperatures is also different. When the temperature decreases at night, the box with the side with natural stone filled with filler-PCM needs 3 more hours to reach low temperatures.
5. In view of the above, we may conclude that the PCMs make the maximum temperatures decrease and the minimum ones increase during the day cycle and the night cycle. Moreover, the time to reach low temperatures is delayed.

See Figure 6. Temperatures inside a box with a side with natural stone and inside a box with natural stone filled with fiiier-PCM.

The advantages that derived from this invention are the following ones:
1) Energy saving in the heating and/or air conditioning systems; 2) Increase of the thermal comfort inside the buildings (reduction of the differences of temperature between night and day and between the different rooms of the same building); 3) Storage of the heat coming from outside; 4) Avoidance of the excess of heat coming from outside.

### DESCRIPTION OF THE FIGURES

In order to complement the description of this invention and with the aim of making the understanding of its characteristics easier, please find hereafter a series of figures where, in an illustrative and not limitative way, the following diagrams and figures are represented:
Figures 7A and 7B: Micrographs of the average porosity natural stone obtained with the scanning electron microscope.
Figures 8A and 8B: Micrographs of the average porosity natural stone with PCM obtained with the scanning electron microscope.
Figures 9A and 9B: Micrographs of the natural stone filled with PCM filler obtained with the scanning electron microscope.

### PREFERENTIAL EXECUTION OF THE INVENTION

Among the different compositions of the phase change materials (PCM) and the processes of application for the treatment of the natural stone that can be carried out taking this invention as a basis, the preferential execution is the one that is described hereafter:

### Components:

- Epoxy resin: 83,3 g
- Hardening agent for the epoxy resin: 50 g
- Water: 80 g
- PCM (powder): 10,66g g

Process of application: The described components are mixed (epoxy resin, hardening agent for the epoxy resin, water and PCM powder) and stirred during 1 or 2 minutes, at 400 rpm, before being applied on the surface of the natural stone parts with a spatula or a palette.

Then, the natural stone-PCM parts are placed in an oven at a temperature of 70°C during 24 hours for the polymerisation of the resin.

Once the nature of this invention as well as its practical application have been sufficiently described, we just have to add that the components, proportions and process of application are subject to variations, whenever they do not substantially affect the characteristics that are asserted hereafter.

## Claims

1. Composition of the phase change materials (PCM) for their application to the natural stone with low, average and high porosity (macroporous stone), with the aim of increasing its thermal inertia because of its capacity to store latent heat, **characterized** because the components and proportions of body putty resins of consolidation used in the process of reinforcement of the low porosity natural stone (in the exposed surface) or included in the composition of the mortars applied in the back surface of the low porosity natural stone are the following ones:
- Epoxy resin: 83,3 g
- Hardening agent for the epoxy resin: 50 g
- Water: 80 g
- PCM (powder): 10,66 g

2. Composition of the phase change materials (PCM) for their application to the natural stone with low, average and high porosity (macroporous stone), with the aim of increasing its thermal inertia because of its capacity to store latent heat according to the first claim, **characterized** because the components and proportions of body putty mortars used also as reinforcing interlayer applied in the back surface of the low porosity natural stone are the following ones:
- Epoxy resin: 8,33 g
- Hardening agent for the epoxy resin: 5 g
- Water: 6,67 g
- Stone aggregates: 12,5 g
- PCM (powder): 5 g

3. Composition of the phase change materials (PCM) for their application to the natural stone with low, average and high porosity (macroporous stone), with the aim of increasing its thermal inertia because of its capacity to store latent heat according to the first claim, **characterized** because the components and proportions of fillers with high-viscosity PCMs used to fill the pores of the macroporous stones are the following ones:
- Epoxy resin: 15 g
- Hardening agent for the epoxy resin: 9 g
- Water: 9,6 g
- PCM (powder): 6,72 g

4. Process of application of the phase change materials (PCM) to the natural stone according to its low, average or high porosity and according to the first claim **characterised** because, for the low porosity natural stone used as body putty resins of consolidation, the following components:
- Epoxy resin: 83,3 g
- Hardening agent for the epoxy resin: 50 g
- Water: 80 g
- PCM (powder): 10,66 g
are mixed and stirred during 1 or 2 minutes, at 400 rpm, before being applied on the surface of the natural stone with a spatula or a palette. Then, the natural stone-PCM parts are placed in an oven at a temperature of 70°C during 24 hours for the polymerisation of the resin.

5. Process of application of the phase change materials (PCM) to the natural stone according to its low, average or high porosity and according to the second claim **characterised** because, for the low porosity natural stone used as body putty, the following components:
- Epoxy resin: 8,33 g
- Hardening agent for the epoxy resin: 5 g
- Water: 6,67 g
- PCM (powder): 5 g
are mixed and stirred during 1 or 2 minutes, at 400 rpm, before adding the stone aggregates. Finally, it is being stirred for 1 or 2 minutes before being applied on the surface of the natural stone with a spatula or a palette.

6. Process of application of the phase change materials (PCM) to the natural stone according to its low, average or high porosity **characterised** because, for the average porosity natural stone, the process steps are the following ones:
- The natural stone is placed in a vacuum packed tray (100 mbar) for 1-3 hours.
- The PCM solution is incorporated into the vacuum chamber and the natural stone is bathed in this solution.
- The vacuum is kept for one hour.
- The vacuum gets broken.
- The natural stone remains in the bath for 2 hours under atmospheric pressure.
- The final product, i.e. the natural stone-PCM is placed in an oven at a temperature of 50°C during 24 hours in order to dry it.

7. Process of application of the phase change materials (PCM) to the natural stone according to its low, average or high porosity and according to the third claim **characterised** because, for the high porosity natural stone used as body putty for the macropores of the stone, the following components:
- Epoxy resin: 15 g
- Hardening agent for the epoxy resin: 9 g
- Water: 9,6 g
- PCM (powder): 6,72 g
are mixed and stirred during 1 or 2 minutes, at 400 rpm, before being applied on the surface of the natural stone with a spatula or a palette.
